# EUROPÄISCHE PATENTSCHRIFT

(11) **EP 3 380 722 B1**
(45) Veröffentlichungstag und Bekanntmachung des Hinweises auf die Patenterteilung: **21.05.2025**
(21) Anmeldenummer: 16791624.6
(22) Anmeldetag: 09.11.2016
(51) Int. Cl.: F03D 7/04, F03D 80/40, F03D 80/10, F03D 17/00

(54) **VERFAHREN ZUM AUSGEBEN VON STEUERBEFEHLEN ODER EREIGNISMELDUNGEN FÜR EINE WINDENERGIEANLAGE ODER EINEN WINDPARK SOWIE EINE AUSWERTEEINRICHTUNG UND EIN SYSTEM HIERFÜR**
METHOD FOR OUTPUTTING CONTROL INSTRUCTIONS OR EVENT MESSAGES FOR A WIND ENERGY INSTALLATION OR A WIND FARM, AND AN EVALUATION DEVICE AND A SYSTEM THEREFOR
PROCÉDÉ D'ÉMISSION D'INSTRUCTIONS DE COMMANDE OU DE NOTIFICATIONS D'ÉVÉNEMENT POUR UNE ÉOLIENNE OU UN PARC ÉOLIEN AINSI QUE DISPOSITIF D'ÉVALUATION ET SYSTÈME ASSOCIÉS

(30) Priorität: 24.11.2015 DE 102015120306
(43) Veröffentlichungstag der Anmeldung: 03.10.2018
(73) Patentinhaber: Wobben Properties GmbH, 26607 Aurich (DE)
(72) Erfinder: DEMUTH, Simon, 26524 Hage (DE)
(74) Vertreter: Eisenführ Speiser
(86) Internationale Anmeldenummer: PCT/EP2016/077035
(87) Internationale Veröffentlichungsnummer: WO 2017/089129

(56) Entgegenhaltungen:
- EP-A1- 2 520 794
- EP-A1- 2 853 729
- EP-A2- 2 175 540
- WO-A2-2008/086801
- DE-A1- 102010 063 396
- DE-A1- 102013 002 662
- US-A1- 2011 270 577
- US-A1- 2014 058 615

## Beschreibung

Die Erfindung betrifft ein Verfahren zum Ausgeben von Steuerbefehlen an eine Windenergieanlage oder einen Windpark oder zum Ausgeben von Ereignismeldungen für eine Windenergieanlage oder einen Windpark. Ferner betrifft die Erfindung eine Auswerteeinrichtung zur Ausführung des Verfahrens und ein System mit der Auswerteeinrichtung zur Ausführung des Verfahrens.

Es ist bekannt, dass Windenergieanlagen eine Vielzahl von Sensoren aufweisen. Die Sensoren dienen beispielsweise, um den Betriebszustand einer Windenergieanlage zu überwachen. Es werden z. B. Temperaturen im Bereich des Generators der Windenergieanlage mit den Temperatursensoren aufgenommen, die - solange sie sich in einem vordefinierten Normalbereich oder Toleranzbereich befinden - auf eine fehlerfreie Funktion der Windenergieanlage hindeuten.

Treten Messwerte der Temperatur aus dem Toleranzbereich heraus, so wird eine Fehlfunktion der Windenergieanlage festgestellt. In diesem Fall muss die Windenergieanlage beispielsweise abgeschaltet und vom Netz getrennt werden. Üblicherweise müssen diese Toleranzbereiche, in denen Temperaturmesswerte auf eine korrekt funktionierende Windenergieanlage schließen lassen, groß gewählt werden. Ein großer Toleranzbereich gewährleistet, dass hohe Messwerte von Windenergieanlagen, die z. B. im Sommer hohen Temperaturen ausgesetzt werden aber nicht grundsätzlich auf einen Fehler hindeuten, auch nicht als Fehlfunktion interpretiert werden.

Analog müssen Temperaturwerte beim Betrieb einer Windenergieanlage in kalten Regionen oder zu kalten Jahreszeiten, die im Bereich des Sensors gemessen werden und unterhalb eines Normalwertes liegen, ebenfalls als fehlerfreie Funktion der Windenergieanlage gewertet werden, solange sie nicht unterhalb eines Grenzwertes des Toleranzbereichs liegen.

Durch die Wahl dieser breit vordefinierten Toleranzbereiche für verschieden Sensoren werden somit Fehlfunktionen in einer Windenergieanlage erst dann entdeckt, wenn die Fehlfunktion zu einer gravierenden Beeinflussung des Betriebsverhaltens geführt hat.

Dokument US 2011/0270577 A1 betrifft ein System und ein Verfahren zum Detektieren von Anomalitäten in Windenergieanlagen. Hierzu wird beschrieben, dass auf die Windenergieanlagen mittels einer Computervorrichtung aus der Ferne zugegriffen werden kann, um Sensorwerte der Windenergieanlagen zu empfangen. Mit dem Computer können dann abweichende Sensordaten durch Vergleich entsprechender Sensordaten anderer Windenergieanlagen detektiert werden. Weiter beschreibt Dokument DE 10 2013 002 662 A1 ein Verfahren und eine Vorrichtung, mit der Sollbetriebsvorgaben für eine Windenergieanlage in Abhängigkeit von Abnutzungsgraden zweier unterschiedlicher Windenergieanlagen ermittelt werden. Ein weiteres Beispiel aus dem Stand der Technik ist aus EP 2 175 540 A2 bekannt.

Aufgabe der vorliegenden Erfindung ist es daher, die Missstände des Standes der Technik zu beheben und insbesondere frühzeitig von Normalwerten abweichende Messwerte oder außergewöhnliche Betriebszustände einer Windenergieanlage detektieren zu können. Jedenfalls ist es Aufgabe der vorliegenden Erfindung, den Stand der Technik weiterzubilden. Das Deutsche Patent- und Markenamt hat in der Prioritätsanmeldung zu vorliegender Anmeldung den folgenden Stand der Technik recherchiert: GB 2 475 609 A, US 2009 / 0 039 650 A1, US 2010/0 143 120 A1, WO 2001/80 395 A2.

Hierzu betrifft die Erfindung ein Verfahren zum Ausgeben eines Steuerbefehls mit einer Auswerteeinrichtung an mindestens eine erste Windenergieanlage oder mindestens einen ersten Windpark und/oder zum Ausgeben einer Ereignismeldung über den Betriebszustand der ersten Windenergieanlage oder des ersten Windparks mit der Auswerteeinrichtung. Erfindungsgemäß werden von der Auswerteeinrichtung Daten von mindestens einer weiteren Windenergieanlage oder mindestens einem weiteren Windpark empfangen. Die erste Windenergieanlage ist eine andere als die weitere Windenergieanlage und bevorzugt in einem vom ersten Windpark unterschiedlichen weiteren Windpark angeordnet. Ebenfalls ist der erste Windpark ein anderer als der weitere Windpark.

Die empfangenen Daten werden in der Auswerteeinrichtung ausgewertet und ein Steuerbefehl oder eine Ereignismeldung für die erste Windenergieanlage oder den ersten Windpark in Abhängigkeit der empfangenen und ausgewerteten Daten ausgegeben.

Demnach werden also zum Erzeugen eines Steuerbefehls oder einer Ereignismeldung für eine erste Windenergieanlage oder einen ersten Windpark Daten in einer Auswerteeinrichtung verarbeitet, die von einer weiteren Windenergieanlage oder einem weiteren Windpark der Auswerteeinrichtung zugeführt werden.

Vorzugsweise ist eine Datenverbindung, die eine Datenleitung oder eine drahtlose Datenverbindung ist, zwischen dem weiteren Windpark oder der weiteren Windenergieanlage und der Auswerteeinrichtung zum Übertragen der Daten an die Auswerteeinrichtung vorgesehen.

Mit der Erfindung ist es daher möglich zur Bewertung des Betriebszustandes sowie zum Eingriff in den Betriebszustand einer ersten Windenergieanlage oder eines ersten Windparks, Daten einer weiteren Windenergieanlage oder eines weiteren Windparks, die z. B. Messwerte sind, zu berücksichtigen.

Weichen demnach beispielsweise Betriebsparameter der ersten Windenergieanlage oder des ersten Windparks signifikant von den als Daten empfangenen Parametern oder Messwerten der weiteren Windenergieanlage oder des weiteren Windparks ab, so kann hierdurch auf einen ungewöhnlichen Betriebszustand der ersten Windenergieanlage oder des ersten Windparks geschlossen werden. Demnach kann bereits frühzeitig auf ungewöhnliche Betriebsparameter der ersten Windenergieanlage oder des ersten Windparks reagiert werden, ohne dass die Betriebsparameter der ersten Windenergieanlage oder des ersten Windparks außerhalb eines Toleranzbereichs treten müssen.

Gemäß einer Ausführungsform sind eine erste Steuerung der ersten Windenergieanlage oder des ersten Windparks und eine weitere Steuerung der weiteren Windenergieanlage oder des weiteren Windparks über eine Datenverbindung verbunden. Die Auswerteeinrichtung ist Bestandteil der ersten Steuerung der ersten Windenergieanlage oder des ersten Windparks.

Demnach wird die Auswerteeinrichtung einfach in eine bestehende erste Steuerung integriert, sodass lediglich eine Datenverbindung zwischen der ersten Steuerung und der weiteren Steuerung der weiteren Windenergieanlage oder dem weiteren Windpark hergestellt werden muss.

Gemäß der Erfindung sind eine erste Steuerung der ersten Windenergieanlage oder des ersten Windparks und eine weitere Steuerung der weiteren Windenergieanlage oder des weiteren Windparks über eine Datenverbindung mit einer Leitwarte verbunden, wobei die Auswerteeinrichtung Bestandteil der Leitwarte ist.

Demnach ist eine zentrale Leitwarte vorgesehen, mit der also mehrere Windenergieanlagen oder mehrere Windparks mittels ihrer Steuerungen verbunden sind. In der Leitwarte werden demnach zentral mit der Auswerteeinrichtung Steuerbefehle für Windenergieanlagen oder Windparks erzeugt oder Ereignismeldungen für Windenergieanlagen oder Windparks ausgegeben. Hierbei werden in der Leitwarte die Betriebsparameter, z. B. Sensorwerte anderer Windenergieanlagen oder anderer Windparks berücksichtigt.

Eine zentrale Auswertung und Steuerung für alle mit der Leitwarte verbundenen Windenergieanlagen oder Windparks ist somit möglich, sodass zentral abweichende Parameter, Werte oder Messwerte aller angeschlossenen Windenergieanlagen oder Windparks detektiert werden können und auf Fehler frühzeitig reagiert werden kann.

Gemäß einer vorteilhaften Ausführungsform umfasst das Verfahren den Schritt, dass erste Daten, die ersten Messwerten entsprechen und mit mindestens einem Sensor der ersten Windenergieanlage oder des ersten Windparks aufgenommen werden, von der Auswerteeinrichtung empfangen werden. Ferner umfasst das Verfahren das Aufnehmen von weiteren Daten, die weiteren Messwerten entsprechen und mit mindestens einem weiteren Sensor mindestens einer von der ersten Windenergieanlage unterschiedlichen weiteren Windenergieanlage oder einem von dem ersten Windpark unterschiedlichen weiteren Windpark aufgenommen werden.

Zudem umfasst das Verfahren den Schritt des Steuerns der ersten Windenergieanlage oder des ersten Windparks in Abhängigkeit der ersten und der weiteren Messwerte und/oder das Ausgeben einer Ereignismeldung über den Betriebszustand der ersten Windenergieanlage oder des ersten Windparks in Abhängigkeit der ersten und weiteren Messwerte.

Demnach werden also zur Steuerung einer ersten Windenergieanlage oder eines ersten Windparks nicht nur die in der Windenergieanlage oder dem Windpark gemessenen Sensorwerte oder Messwerte für die Steuerung herangezogen, sondern es werden neben diesen Werten auch die mit der Auswerteeinrichtung empfangenen und aufgenommenen weiteren Messwerte eines anderen Windparks oder einer anderen Windenergieanlage hinzugezogen, um mit der Auswerteeinrichtung Steuerbefehle oder Ereignismeldungen über den Betriebszustand der ersten Windenergieanlage oder des ersten Windparks auszugeben.

Gemäß einer weiteren vorteilhaften Ausführungsform dient die Auswerteeinrichtung zur Ausgabe eines Steuerbefehls und/oder einer Ereignismeldung, wobei der Auswerteeinrichtung erste Messwerte von Sensoren der ersten Windenergieanlage oder des ersten Windparks und weitere Messwerte von Sensoren mindestens einer weiteren Windenergieanlage oder eines weiteren Windparks zugeführt werden.

Hierbei sind die Sensoren, die in der ersten und der weiteren Windenergieanlage oder im ersten oder im weiteren Windpark angeordnet sind, jeweils in einem im Wesentlichen gleichen Bereich oder einer im Wesentlichen gleichen Position der Windenergieanlagen oder der Windparks angeordnet.

Vorteilhafterweise ist daher eine genaue Referenzwertbildung aus den weiteren Messwerten möglich, da nur Werte von Sensoren für die Referenzwertbildung verwendet werden, die im Betrieb tatsächlich vergleichbaren Bedingungen innerhalb der ersten und weiteren Windenergieanlagen oder des ersten und weiteren Windparks ausgesetzt sind.

Gemäß einer weiteren Ausführungsform gibt die Auswerteeinrichtung eine Ereignismeldung, insbesondere eine Fehlermeldung, aus, wenn eine Abweichung der Messwerte der ersten Windenergieanlage oder des ersten Windparks von den weiteren Messwerten oder von einem aus den weiteren Messwerten bestimmten Referenzwert, der z. B. ein Mittelwert der weiteren Messwerte oder ein vom Mittelwert abhängiger Wert der weiteren Messwerte ist, detektiert wird und die Abweichung oberhalb eines vordefinierten Schwellenwerts liegt.

Demnach wird also aus den weiteren Messwerten in der Auswerteeinrichtung z. B. ein Referenzwert, z. B. durch Mittelwertbildung, bestimmt. Ferner wird zu diesem Referenzwert ein Schwellenwert vorgegeben oder bestimmt. Weicht nun ein erster Messwert um mehr als den vordefinierten Schwellenwert vom Referenzwert ab, so wird von der Auswerteeinrichtung der erste Messwert als fehlerhaft interpretiert. Hierdurch wird dann auf eine Fehlfunktion der erste Windenergieanlage oder des ersten Windparks geschlossen.

Gemäß einer weiteren Ausführungsform werden zur Ausgabe eines Steuerbefehls und/oder einer Ereignismeldung erste und weitere Messwerte von den Sensoren von ersten und weiteren Windenergieanlagen oder Windparks verwendet, die einen maximalen vordefinierten Abstand von weniger als 100 km, insbesondere 500 m, 5 km, 10 km, 20 km oder 50 km, zueinander aufweisen.

In einer Auswerteeinrichtung, die z. B. im Bereich einer ersten Windenergieanlage oder eines ersten Windparks angeordnet ist, werden also nur weitere Messwerte von weiteren Windenergieanlagen oder Windparks verwendet, die einen maximalen Abstand von 100 km zur ersten Windenergieanlage oder zum ersten Windpark haben.

Hierdurch ist gewährleistet, dass der Einfluss von Umweltbedingungen bei der Betrachtung der Messwerte, wie z. B. der Einfluss auf die Außentemperatur, die sich auf die ersten und weitere Messwerte nur gleichermaßen auswirkt, wenn die Sensoren bzw. Windenergieanlagen sich im Wesentlichen in der gleichen Region befinden, kompensiert werden können.

Würden diese Abstände überschritten werden, so wäre ein Vergleich immer schwieriger oder gar nicht mehr möglich. Insbesondere ist zur Bildung bestimmter Ereignismeldungen oder bestimmter Steuerbefehle ein noch geringerer vordefinierter Abstand, nämlich z. B. ein Abstand von wenigen 500 m bis zu wenigen km, vorteilhaft.

Gemäß einer weiteren Ausführungsform werden mit der Auswerteeinrichtung, im Falle, dass der Auswerteeinrichtung mittels der weiteren Daten ein Eisansatz an einer der weiteren Windenergieanlagen gemeldet wird, Steuerdaten zum Aktivieren der Eiswarnleuchten an die erste Windenergieanlage oder den ersten Windpark ausgegeben. Eiswarnleuchten eines ersten Windparks können somit also schon mithilfe eines an weiteren Windenergieanlagen detektierten Eisansatzes aktiviert werden, obwohl bei den ersten Windenergieanlagen noch kein Eisansatz detektiert wurde.

Gemäß einer weiteren Ausführungsform empfängt die Auswerteeinrichtung Daten in Form eines Synchronisationssignals von einer weiteren Windenergieanlage oder einem weiteren Windpark und erzeugt einen Steuerbefehl in Form eines weiteren Synchronisationssignals für die erste Windenergieanlage oder den ersten Windpark, um die Flughindernisbefeuerungsleuchten der ersten Windenergieanlage oder des ersten Windparks synchron zu den Flughindernisbefeuerungsleuchten der weiteren Windenergieanlagen oder weiteren Windparks blinken zu lassen.

Ein synchrones gleichmäßiges Blinken der Flughindernisbefeuerung war bislang nur über aufwändige Verfahren wie die Synchronisation über GPS-Daten möglich, wobei nun eine noch genauere einfache Synchronisation über eine Datenverbindung der Windenergieanlagen oder Windparks möglich ist.

Gemäß einer weiteren vorteilhaften Ausführungsform weist die Auswerteeinrichtung eine Steuerschnittstelle auf, um weitere Energieerzeuger zum Datenaustausch zu verbinden. Die weiteren Energieerzeuger werden dann mittels der Steuerschnittstelle gesteuert, wobei hierzu mittels der Auswerteeinrichtung Daten mit dem weiteren Energieerzeuger ausgetauscht werden. Zum Steuern werden an den weiteren Energieerzeuger insbesondere Regelwerte, wie Leistungssollwerte, Blindleistungssollwerte und dergleichen, übertragen oder Daten vom weiteren Energieerzeuger über die Schnittstelle von der Auswerteeinrichtung empfangen.

Damit ist also unabhängig von einem Netzbetreiber eine autarke Steuerung der Windenergieanlagen und weiterer Energieerzeuger untereinander durch direkten Datenaustausch möglich. Insbesondere ist z. B. von der Auswerteeinrichtung ein Leistungssollwert an den weiteren Energieerzeuger ausgebbar, wenn vom ersten und auch vom weiteren Windpark, z. B. aufgrund einer Flaute, nicht genügend Leistung in das Versorgungsnetz eingespeist werden kann.

Gemäß einer weiteren Ausführungsform ist die Auswerteeinrichtung Bestandteil des ersten Windparks und ersetzt eine Steuerung des ersten Windparks, also den Windparkregler des ersten Windparks. Die Auswerteeinrichtung empfängt dann über die Datenverbindung Regelwerte, wie Leistungssollwerte, Blindleistungssollwerte und dergleichen, von einem Windparkregler mindestens eines weiteren Windparks.

Eine Regelung eines Windparks kann somit durch einen Windparkregler eines weiteren Windparks erfolgen, sodass z. B. die Kosten für einen ersten Windpark eingespart werden können.

Gemäß einer weiteren Ausführungsform werden über die Datenverbindung von der weiteren Windenergieanlage oder dem weiteren Windpark Wetterdaten empfangen und in der Auswerteeinrichtung verarbeitet. In Abhängigkeit der Wetterdaten werden Steuerbefehle zur Steuerung der ersten Windenergieanlage oder des ersten Windparks gesendet.

Somit können vorgegebene Sollwerte z. B. vom Netzbetreiber zusätzlich auf Grundlage von Wetterprognosen bei der Steuerung der ersten Windenergieanlage oder des ersten Windparks berücksichtigt werden. Hierbei basieren die Wetterprognosen nicht nur auf Daten, die mit den Umweltsensoren der ersten Windenergieanlage oder des ersten Windparks detektiert wurden. Dadurch lassen sich Wetterdaten weitaus genauer prognostizieren und verwenden.

Ferner betrifft die Erfindung eine Auswerteeinrichtung mit einer Schnittstelle zum Ausgeben eines Steuerbefehls an mindestens eine erste Windenergieanlage oder einen ersten Windpark und/oder zum Ausgeben einer Ereignismeldung über den Betriebszustand der mindestens ersten Windenergieanlage oder des mindestens ersten Windparks. Ferner umfasst die Auswerteeinrichtung auch eine weitere Schnittstelle zum Empfangen von Daten, die von mindestens einer weiteren Windenergieanlage, insbesondere eines weiteren Windparks, oder mindestens einem weiteren Windpark an die Auswerteeinrichtung übertragen werden. Gemäß einer speziellen Ausführungsform ist die Auswerteeinrichtung eingerichtet, um ein Verfahren gemäß einer der vorhergehenden Ausführungsformen auszuführen.

Gemäß einer weiteren Ausführungsform umfasst die Auswerteeinrichtung eine Steuerschnittstelle zum Verbinden mit weiteren Energieerzeugern. Diese Steuerschnittstelle dient zum Datenaustausch mit weiteren Energieerzeugern und zum Steuern der Energieerzeuger. Insbesondere dient die Schnittstelle zum Übertragen von Regelwerten, wie Leistungssollwerten, Blindleistungssollwerten und dergleichen, und/oder zum Empfangen derartiger Daten über die Schnittstelle.

Ferner betrifft die Erfindung ein System mit mindestens einer ersten Windenergieanlage oder mindestens einem ersten Windpark und mindestens einer weiteren Windenergieanlage oder mindestens einem weiteren Windpark. Die weitere Windenergieanlage ist insbesondere eine Windenergieanlage eines vom ersten Windpark unterschiedlichen weiteren Windparks.

Zudem umfasst das System eine Datenverbindung zum Austausch von Daten zwischen der mindestens ersten Windenergieanlage oder dem mindestens ersten Windpark und der mindestens einen weiteren Windenergieanlage oder dem mindestens einen weiteren Windpark. Das System ist gemäß einer Ausführungsform eingerichtet, ein Verfahren gemäß einer der vorgenannten Ausführungsformen auszuführen und umfasst gemäß einem weiteren besonderen Ausführungsbeispiel die erfindungsgemäße Auswerteeinrichtung.

Nachfolgend werden Ausführungsbeispiele der vorliegenden Erfindung exemplarisch unter Bezugnahme auf die begleitenden Figuren näher erläutert. Es zeigen:
- Fig. 1: eine Windenergieanlage,
- Fig. 2: einen Windpark,
- Fig. 3: einen ersten sowie einen weiteren Windpark,
- Fig. 4: die Windparks aus Fig. 3 und eine Leitwarte und
- Fig. 5: Messwerte einer ersten sowie weiterer Windenergieanlagen.

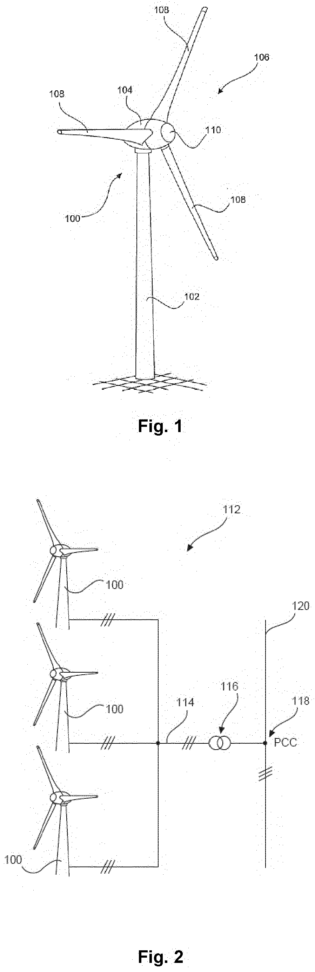

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Die Windenergieanlage 100 aus Fig. 1 kann auch im Zusammenschluss mit mehreren Windenergieanlagen 100 in einem Windpark, wie er im Folgenden in Bezug auf Fig. 2 beschrieben wird, betrieben werden.

In Fig. 2 ist ein Windpark 112 mit exemplarisch drei Windenergieanlagen 100 dargestellt. Die Windenergieanlagen 100 können gleich oder verschieden sein. Die Windenergieanlagen 100 stehen somit repräsentativ für im Grunde eine beliebige Anzahl von Windenergieanlagen 100 eines Windparks 112. Die Windenergieanlagen 100 stellen ihre Leistung, nämlich insbesondere den erzeugten Strom, über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen.

Fig. 2 ist nur eine vereinfachte Darstellung eines Windparks 112, die beispielsweise keine Leistungssteuerung zeigt, obwohl natürlich eine Leistungssteuerung vorhanden ist. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

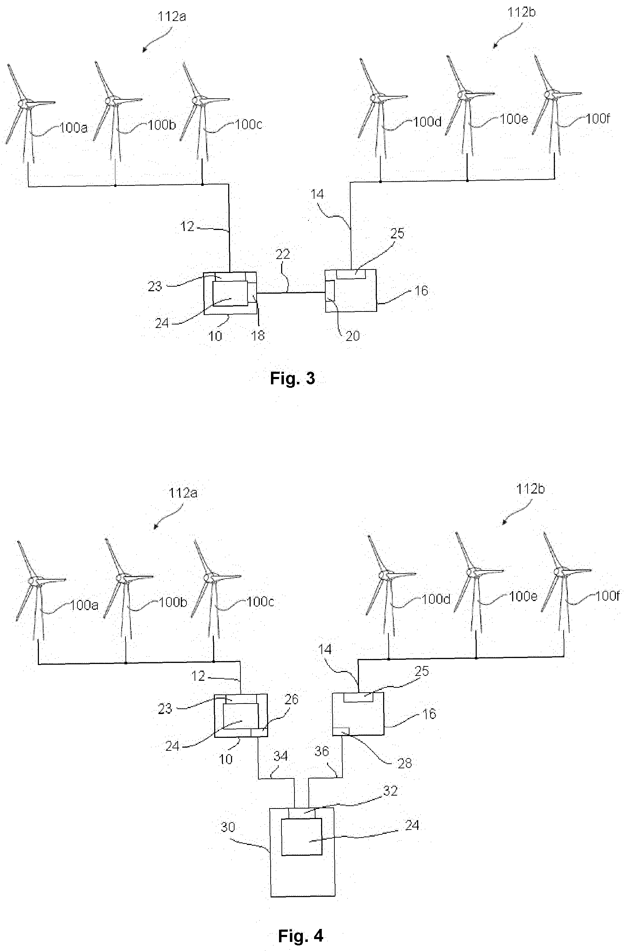

Fig. 3 zeigt nun einen ersten Windpark 112a und einen weiteren Windpark 112b. Der erste Windpark 112a weist eine erste Windenergieanlage 100a sowie zwei Windenergieanlagen 100b und 100c auf. Der weitere Windpark 112b weist eine weitere Windenergieanlage 100d sowie die Windenergieanlagen 100e und 100f auf.

Die Windenergieanlagen 100a bis 100c des ersten Windparks 112a sind mit einem ersten Windparkregler 10 über eine Datenverbindung 12 verbunden. Die Windenergieanlagen 100d bis 100f sind ebenfalls über eine Datenleitung 14 mit einem weiteren Windparkregler 16 verbunden.

Die Windparkregler 10 und 16 sind eingerichtet, von einem Netzbetreiber verschiedene Vorgabewerte oder Sollwerte zu empfangen, um die Leistungserzeugung der einzelnen Windenergieanlagen 100a bis 100f der Windparks 112a, 112b zu regeln. Hierzu weisen die Windparkregler 10, 16 eine Schnittstelle auf, die hier jedoch nicht eingezeichnet ist.

Neben der Schnittstelle zum Vorgeben von Steuerwerten des Netzbetreibers weist der erste Windparkregler 10 eine Schnittstelle 18 und der weitere Windparkregler 16 eine Schnittstelle 20 auf, wobei die Schnittstellen 18 und 20 über eine Datenverbindung 22 zum Austausch von Daten zwischen den Windparkreglern 10, 16 miteinander verbunden sind. Außerdem weist der erste Windparkregler 10 eine Schnittstelle 23 und der weitere Windparkregler 16 eine Schnittstelle 25 auf, um mit den jeweils zugeordneten Windenergieanlagen 100a bis 100f über die Datenverbindung 12, 14 Daten austauschen zu können.

Vorliegend umfasst der erste Windparkregler 10 ferner eine Auswerteeinrichtung 24, wobei diese Auswerteeinrichtung 24 eingerichtet ist, Daten über die Datenleitung 22 vom weiteren Windpark 112b oder der weiteren Windenergieanlage 100d zu empfangen. Die Daten werden dann in der Auswerteeinrichtung 24 verarbeitet und über die Datenleitung 12 ein Steuerbefehl an die weitere Windenergieanlage 100a oder die Windenergieanlagen 100a bis 100c des weiteren Windparks 112a ausgegeben.

Die Auswerteeinrichtung 24 ist ferner eingerichtet, eine Ereignismeldung auszugeben, indem diese neben den weiteren Daten über die Datenleitung 22 auch Sensordaten oder Daten, die den Zustand der Windenergieanlagen 100a bis 100c des ersten Windparks 112a darstellen, über die Datenleitung 12 empfängt und auswertet. Somit ist die Auswerteeinrichtung 24 eingerichtet, anhand der über die Datenleitung 12 empfangenen ersten Daten oder Messwerte und der über die Datenleitung 22 empfangenen weiteren Daten oder Messwerte eine Ereignismeldung, z. B. eine Fehlermeldung, auszugeben. Diese Fehlermeldung kann z. B. auf einer Anzeige des ersten Windparkreglers 10 dargestellt werden.

Fig. 4 zeigt ein alternatives Ausführungsbeispiel der Fig. 3. Gleiche Bezugsziffern entsprechen gleichen Merkmalen.

Wiederum sind die Windparks 112a und 112b jeweils mit einem Windparkregler 10, 16 verbunden, wobei die Windparkregler 10, 16 nicht die Schnittstellen 18 und 20 aufweisen. Stattdessen weist der erste Windparkregler 10 eine Schnittstelle 26 und der weitere Windparkregler 16 eine Schnittstelle 28 auf. Der erste Windparkregler 10 weist im Ausführungsbeispiel der Fig. 4 auch keine Auswerteeinrichtung 24 auf. Stattdessen ist die Auswerteeinrichtung 24 Bestandteil einer Leitwarte 30.

Die Leitwarte 30 ist z. B. eine zentrale Datensammel- oder Steuerstelle, an der eine Vielzahl von Windparks 112 angeschlossen ist, wobei die Leitwarte 30 alle aufgenommenen Parameter oder Daten der angeschlossenen Windenergieanlagen 100 oder Windparks 112 speichern und auswerten kann. Ferner lassen sich die angeschlossenen Windenergieanlagen 100 mit der Leitwarte 30 fernsteuern.

Die Auswerteeinrichtung 24 umfasst eine Schnittstelle 32, mit der die Schnittstellen 26 und 28 der Windparkregler 10 und 16 über Datenleitungen 34 und 36 verbunden sind. Über die Datenleitung 36 und die Schnittstelle 32 empfängt die Auswerteeinrichtung 24 in der Leitwarte 30 weitere Daten des weiteren Windparks 112b, wobei diese weiteren Daten z. B. Messwerte der Windenergieanlagen 100d bis 100f sind. Ferner empfängt die Auswerteeinrichtung 24 über die Datenleitung 34 erste Daten vom ersten Windpark 112a, die z. B. Messwerte der Windenergieanlagen 100a bis 100c sind. In der Auswerteeinrichtung 24 werden dann anhand der ersten Messwerte sowie der weiteren Messwerte Steuerbefehle für den ersten Windpark 112a erzeugt und die Windenergieanlagen 100a bis 100c des ersten Windparks 112a mit diesen Steuerbefehlen gesteuert.

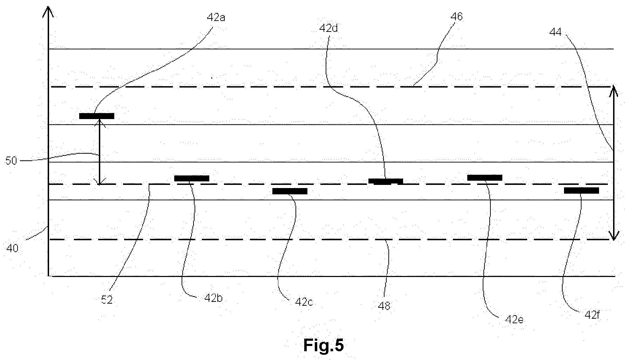

Ferner werden auf Grundlage der ersten und der weiteren Daten oder Messwerte Ereignismeldungen, z. B. Fehlermeldungen, auf einer nicht dargestellten Anzeige der Leitwarte 30 ausgegeben. Hierzu werden die ersten und weiteren Daten oder Messwerte anhand des in der folgenden Fig. 5 dargestellten Beispiels verarbeitet.

Fig. 5 zeigt ein Diagramm, das Messwerte darstellt, die in der Auswerteeinrichtung 24 von dem ersten Windpark 112a und dem zweiten Windpark 112b empfangen werden. Die senkrechte Achse 40 entspricht einer Temperaturachse. Ferner sind die Messwerte 42a bis 42f dargestellt, die den einzelnen Windenergieanlagen 100a bis 100f zugeordnet sind. Die Messwerte 42a bis 42f entsprechen jeweils einem gemessenen Temperaturwert im Bereich eines Generators der Windenergieanlage 100a bis 100f. Die Sensoren sind in allen Windenergieanlagen 100a bis 100f an der im Wesentlichen gleichen Position angeordnet.

Ferner wird hier davon ausgegangen, dass die Windparks 112a und 112b einen maximalen Abstand von 100 km aufweisen. Zudem ist ein Toleranzbereich 44 durch den oberen Grenzwert 46 und den unteren Grenzwert 48 dargestellt. Alle Messwerte 42a bis 42f liegen innerhalb des Toleranzbereichs 44. Es ist jedoch erkennbar, dass der Messwert der ersten Windenergieanlage 100a, der dem Messwert 42a entspricht, um mehr als einen Schwellenwert 50 von einem Mittelwert der Messwerte 42b bis 42f abweicht. Daher ist vorliegend davon auszugehen, dass, obwohl sich der Messwert 42a in dem Toleranzbereich 44 befindet, ein Fehler in der ersten Windenergieanlage 100a vorliegt.

Hier kann nun von der Auswerteeinrichtung 24 aufgrund des abweichenden Messwerts 42a von einem durch den Mittelwert dargestellten Referenzwert 52 um mehr als einen Schwellenwert 50 eine Ereignismeldung, z. B. eine Fehlermeldung, ausgegeben werden.

Demnach kann bereits, obwohl die erste Windenergieanlage 100a noch in einem durch den Toleranzbereich 44 definierten erlaubten Bereich arbeitet, eine Unregelmäßigkeit erkannt und Servicepersonal zur ersten Windenergieanlage 100a gesendet werden, das den Grund für den abweichenden Messwert 42a kontrollieren und ggf. beheben kann, ohne dass die erste Windenergieanlage 100a aufgrund eines Fehlers vom Netz getrennt werden muss. Ein frühzeitiges Reagieren auf einen bevorstehenden Fehler ist somit möglich.

## Patentansprüche

1. Verfahren zum Ausgeben von Steuerbefehlen mit einer Auswerteeinrichtung (24) an mindestens eine erste Windenergieanlage (100a) oder mindestens einen ersten Windpark (112a), wobei von der Auswerteeinrichtung (24) Daten von mindestens einer weiteren Windenergieanlage (100d) mindestens eines weiteren Windparks (112b) oder von mindestens einem weiteren Windpark (112b) empfangen und mit der Auswerteeinrichtung (24) ausgewertet werden, wobei mindestens ein Steuerbefehl für die erste Windenergieanlage (100a) oder den ersten Windpark (112a) in Abhängigkeit der empfangenen Daten von der weiteren Windenergieanlage (100d) oder dem weiteren Windpark (112b) ausgegeben wird, wobei
die erste Windenergieanlage (100a) oder der erste Windpark (112a) und die weitere Windenergieanlage (100d) oder der weitere Windpark (112b) über mindestens eine Datenleitung (34, 36) mit einer Leitwarte (30) verbunden sind und die Auswerteeinrichtung (24) Bestandteil der Leitwarte (30) ist und wobei
mehrere Windparks (112a, 112b) mit der Leitwarte (30) verbunden sind und **dadurch gekennzeichnet, dass**
der erste Windpark (112a) und der zweite Windpark (112b) jeweils mehrere Windenergieanlagen (100) aufweisen, die ihre Leistung in einem jeweiligen Parknetz (114) bereitstellen, so dass die Leistungen der Windenergieanlagen (100) des jeweiligen Windparks (112a, 112b) im jeweiligen Parknetz (114) aufaddiert werden und jeweils ein Transformator vorgesehen ist, um die Spannung im jeweiligen Parknetz hochzutransformieren und um am Einspeisepunkt (118) die Leistung in das Versorgungsnetz (120) einzuspeisen.

2. Verfahren nach Anspruch 1, wobei das Verfahren die Schritte umfasst:
- Aufnehmen von ersten Daten, die ersten Messwerten (42a) entsprechen und mit mindestens einem ersten Sensor der ersten Windenergieanlage (100a) oder des ersten Windparks (112a) erfasst werden,
- Aufnehmen von weiteren Daten, die weiteren Messwerten (42b-42f) entsprechen und mit mindestens einem weiteren Sensor mindestens einer von der ersten Windenergieanlage (100a) unterschiedlichen weiteren Windenergieanlage (100d) oder einem von dem ersten Windpark (112a) unterschiedlichen weiteren Windpark (112b) erfasst werden,
- Steuern der ersten Windenergieanlage (100a) oder des ersten Windparks (112a) in Abhängigkeit der ersten und der weiteren Messwerte (42a-42f) und/oder
- Ausgeben einer Ereignismeldung über den Betriebszustand der ersten Windenergieanlage (100a) oder des ersten Windparks (112a) in Abhängigkeit der ersten und weiteren Messwerte (42a-42f).

3. Verfahren nach Anspruch 1 oder 2, wobei der Auswerteeinrichtung (24) zur Ausgabe eines Steuerbefehls und/oder einer Ereignismeldung erste Messwerte (42a) von ersten Sensoren der ersten Windenergieanlage (100a) oder dem ersten Windpark (112a) und weitere Messwerte (42b-42f) von weiteren Sensoren der weiteren Windenergieanlage (100d) oder des weiteren Windparks (112b) zugeführt werden, wobei die Sensoren in den Windenergieanlagen (100a-100f) oder den Windparks (112a, 112b) jeweils in einem im Wesentlichen gleichen Bereich oder einer im Wesentlichen gleichen Position angeordnet sind.

4. Verfahren nach Anspruch 2 oder 3, wobei die Auswerteeinrichtung (24) eine Ereignismeldung, insbesondere eine Fehlermeldung, ausgibt, wenn eine Abweichung des ersten Messwerts (42a) von den weiteren Messwerten (42b-42f) oder einem aus den weiteren Messwerten (42b-42f) bestimmten Referenzwert (52), der insbesondere ein Durchschnittswert oder Mittelwert der weiteren Messwerte (42b-42f) ist, detektiert wird, der oberhalb eines vordefinierten Schwellenwerts (50) liegt.

5. Verfahren nach einem der vorhergehenden Ansprüche, wobei zur Ausgabe eines Steuerbefehls und/oder einer Ereignismeldung erste Daten, insbesondere erste Messwerte (42a), und weitere Daten, insbesondere weitere Messwerte (42b bis 42f), von den Sensoren von ersten und weiteren Windenergieanlagen (100a bis 100f) und/oder den ersten und weiteren Windparks (112a, 112b) empfangen und/oder ausgewertet werden, die einen maximalen vordefinierten Abstand von 100 km, z. B. 500 m, 5 km, 10 km, 20 km oder 50 km, aufweisen.

6. Verfahren nach einem der vorhergehenden Ansprüche, wobei mit der Auswerteeinrichtung (24) im Falle, dass die Auswerteeinrichtung (24) weitere Daten empfängt, die einen Eisansatz an einer der weiteren Windenergieanlagen (100d) melden, Steuerdaten zum Aktivieren der Eiswarnleuchten der ersten Windenergieanlage (100a) an die erste Windenergieanlage (100a) oder zum Aktivieren der Eiswarnleuchten der Windenergieanlagen (100a-100c) an den ersten Windpark (112a) ausgegeben werden.

7. Verfahren nach einem der vorhergehenden Ansprüche, wobei die Auswerteeinrichtung (24) Daten mit einem Synchronisationssignal von einer weiteren Windenergieanlage (100d) oder einem weiteren Windpark (112b) empfängt und einen Steuerbefehl in Form eines vom empfangenen Synchronisationssignal abhängigen weiteren Synchronisationssignals an die erste Windenergieanlage (100a) oder den ersten Windpark (112a) sendet, um Flughindernisbefeuerungsleuchten der Windenergieanlagen (100a bis 100f) des ersten Windparks (112a) und des weiteren Windparks (112b) synchron blinken zu lassen.

8. Verfahren nach einem der vorhergehenden Ansprüche, wobei die Auswerteeinrichtung (24) eine Steuerschnittstelle aufweist, um weitere Energieerzeuger, die insbesondere keine Windenergieanlagen sind, zum Datenaustausch zu verbinden, wobei die weiteren Energieerzeuger mittels der Steuerschnittstelle gesteuert werden, insbesondere durch Senden oder Empfangen von Daten, wie Regelwerten, nämlich Leistungssollwerten, Blindleistungssollwerten und dergleichen, über die Schnittstelle.

9. Verfahren nach einem der vorhergehenden Ansprüche, wobei die Auswerteeinrichtung (24) Bestandteil des ersten Windparks (112a), insbesondere des ersten Windparkreglers (10), ist und über eine Schnittstelle (18) Regelwerte, wie Leistungssollwerte, Blindleistungssollwerte und dergleichen, von einem weiteren Windparkregler (16) mindestens eines weiteren Windparks (112b) empfängt.

10. Verfahren nach einem der vorhergehenden Ansprüche, wobei von der Auswerteeinrichtung (24) Wetterdaten über eine Datenverbindung (22, 36) empfangen werden, in der Auswerteeinrichtung (24) die Wetterdaten bearbeitet werden und in Abhängigkeit der Wetterdaten Steuerbefehle zur Steuerung der ersten Windenergieanlage (100a) oder des ersten Windparks (112a) erzeugt werden.

11. Auswerteeinrichtung (24) mit einer Schnittstelle (23) zum Ausgeben von Steuerbefehlen an mindestens eine erste Windenergieanlage (100a) oder einen ersten Windpark (112a) und eine weitere Schnittstelle (18, 32) zum Empfangen von Daten, die von einer weiteren Windenergieanlage (100d) eines weiteren Windparks (112b) oder einem weiteren Windpark (112b) an die Auswerteeinrichtung (24) übertragen werden, wobei die Auswerteeinrichtung (24) zur Ausführung des Verfahrens nach einem der vorhergehenden Ansprüche eingerichtet ist, **dadurch gekennzeichnet, dass**
die erste Windenergieanlage (100a) oder der erste Windpark (112a) und die weitere Windenergieanlage (100d) oder der weitere Windpark (112b) über mindestens eine Datenleitung (34, 36) mit einer Leitwarte (30) verbunden sind und die Auswerteeinrichtung (24) Bestandteil der Leitwarte (30) ist und wobei
mehrere Windparks (112a, 112b) mit der Leitwarte (30) verbunden sind.

12. Auswerteeinrichtung (24) nach Anspruch 11 mit einer Schnittstelle zum Verbinden weiterer Energieerzeuger, die insbesondere keine Windenergieanlagen sind.

13. System mit einer Auswerteeinrichtung (24) nach Anspruch 11 oder 12 zur Ausführung des Verfahrens nach einem der Ansprüche 1 bis 10, mit mindestens einer ersten Windenergieanlage (100a) oder mindestens einem ersten Windpark (112a), mindestens einer weiteren Windenergieanlage (100d), insbesondere eines weiteren Windparks (112b), oder mindestens einem weiteren Windpark (112b) sowie einer Datenverbindung (22, 34, 36) zum Austauschen von Daten zwischen der mindestens ersten Windenergieanlage (100a) oder dem mindestens ersten Windpark (112a) und der mindestens einen weiteren Windenergieanlage (100d) oder dem mindestens einen weiteren Windpark (112b).

## Claims

1. A method for outputting control instructions to at least one first wind power installation (100a) or at least one first wind farm (112a) using an evaluation device (24), wherein data are received by the evaluation device (24) from at least one further wind power installation (100d) of at least one further wind farm (112b) or from at least one further wind farm (112b) and are evaluated using the evaluation device (24), wherein at least one control instruction for the first wind power installation (100a) or the first wind farm (112a) is output on the basis of the received data from the further wind power installation (100d) or the further wind farm (112b), wherein
the first wind power installation (100a) or the first wind farm (112a) and the further wind power installation (100d) or the further wind farm (112b) are connected to a control room (30) via at least one data line (34, 36), and the evaluation device (24) is part of the control room (30) and wherein
a plurality of wind farms (112a, 112b) are connected to the control room (30) and **characterized in, that**
the first wind farm (112a) and the second wind farm (112b) each have a plurality of wind power installations (100) which provide their power in an electrical farm network (114), so that the powers of the wind power installations (100) of the respective wind farm (112a, 112b) in the respective electrical farm network (114) are added up and a transformer is provided in each case in order to step up the voltage in the respective wind farm grid and in order to feed the power into the supply network (120) at the feed-in point (118).

2. The method as claimed in claim 1, wherein the method comprises the steps of:
- receiving first data which correspond to first measured values (42a) and are captured using at least one first sensor of the first wind power installation (100a) or of the first wind farm (112a),
- receiving further data which correspond to further measured values (42b-42f) and are captured using at least one further sensor of at least one further wind power installation (100d) which differs from the first wind power installation (100a) or a further wind farm (112b) which differs from the first wind farm (112a),
- controlling the first wind power installation (100a) or the first wind farm (112a) on the basis of the first and further measured values (42a-42f) and/or
- outputting an event message relating to the operating state of the first wind power installation (100a) or of the first wind farm (112a) on the basis of the first and further measured values (42a-42f).

3. The method as claimed in claim 1 or 2, wherein first measured values (42a) from first sensors of the first wind power installation (100a) or the first wind farm (112a) and further measured values (42b-42f) from further sensors of the further wind power installation (100d) or of the further wind farm (112b) are supplied to the evaluation device (24) for outputting a control instruction and/or an event message, wherein the sensors in the wind power installations (100a-100f) or the wind farms (112a, 112b) are each arranged in a substantially identical region or a substantially identical position.

4. The method as claimed in claim 2 or 3, wherein the evaluation device (24) outputs an event message, in particular a fault message, if a deviation of the first measured value (42a) from the further measured values (42b-42f) or a reference value (52), which is determined from the further measured values (42b-42f) and is, in particular, an average value or mean value of the further measured values (42b-42f), above a predefined threshold value (50) is detected.

5. The method as claimed in one of the preceding claims, wherein first data, in particular first measured values (42a), and further data, in particular further measured values (42b to 42f), from the sensors of first and further wind power installations (100a to 100f) and/or the first and further wind farms (112a, 112b), which are at a maximum predefined distance of 100 km, for example 500 m, 5 km, 10 km, 20 km or 50 km, are received and/or evaluated for the purpose of outputting a control instruction and/or an event message.

6. The method as claimed in one of the preceding claims, wherein, if the evaluation device (24) receives further data which report an ice build-up on one of the further wind power installations (100d), control data for activating the ice warning lights of the first wind power installation (100a) are output to the first wind power installation (100a) or for activating the ice warning lights of the wind power installations (100a-100c) are output to the first wind farm (112a) using the evaluation device (24).

7. The method as claimed in one of the preceding claims, wherein the evaluation device (24) receives data with a synchronization signal from a further wind power installation (100d) or a further wind farm (112b) and transmits a control instruction in the form of a further synchronization signal dependent on the received synchronization signal to the first wind power installation (100a) or the first wind farm (112a) in order to cause aviation obstruction lights of the wind power installations (100a to 100f) in the first wind farm (112a) and in the further wind farm (112b) to synchronously flash.

8. The method as claimed in one of the preceding claims, wherein the evaluation device (24) has a control interface for connecting further energy producers, which are not wind power installations in particular, for the purpose of interchanging data, wherein the further energy producers are controlled by means of the control interface, in particular by transmitting or receiving data, such as regulation values, namely desired power values, desired reactive power values and the like, via the interface.

9. The method as claimed in one of the preceding claims, wherein the evaluation device (24) is part of the first wind farm (112a), in particular the first wind farm regulator (10), and receives regulation values, such as desired power values, desired reactive power values and the like, from a further wind farm regulator (16) of at least one further wind farm (112b) via an interface (18).

10. The method as claimed in one of the preceding claims, wherein weather data are received by the evaluation device (24) via a data connection (22, 36), the weather data are processed in the evaluation device (24) and control instructions for controlling the first wind power installation (100a) or the first wind farm (112a) are generated on the basis of the weather data.

11. An evaluation device (24) having an interface (23) for outputting control instructions to at least one first wind power installation (100a) or a first wind farm (112a) and a further interface (18, 32) for receiving data which are transmitted from a further wind power installation (100d) of a further wind farm (112b) or a further wind farm (112b) to the evaluation device (24), wherein the evaluation device (24) is set up to carry out the method as claimed in one of the preceding claims, **characterized in that**
the first wind power installation (100a) or the first wind farm (112a) and the further wind power installation (100d) or the further wind farm (112b) are connected to a control room (30) via at least one data line (34, 36), and the evaluation device (24) is part of the control room (30) and wherein
a plurality of wind farms (112a, 112b) are connected to the control room (30).

12. The evaluation device (24) as claimed in claim 11 having an interface for connecting further energy producers which are not wind power installations, in particular.

13. A system having an evaluation device (24) as claimed in claim 11 or 12, for carrying out the method as claimed in one of claims 1 to 10, having at least one first wind power installation (100a) or at least one first wind farm (112a), at least one further wind power installation (100d), in particular a further wind farm (112b), or at least one further wind farm (112b) and a data connection (22, 34, 36) for interchanging data between the at least first wind power installation (100a) or the at least first wind farm (112a) and the at least one further wind power installation (100d) or the at least one further wind farm (112b).

## Revendications

1. Procédé d'émission d'instructions de commande avec un dispositif d'évaluation (24) à au moins une première éolienne (100a) ou à au moins un premier parc éolien (112a), dans lequel des données d'au moins une autre éolienne (100d) d'au moins un autre parc éolien (112b) ou d'au moins un autre parc éolien (112b) sont reçues par le dispositif d'évaluation (24) et sont évaluées avec le dispositif d'évaluation (24), dans lequel au moins une instruction de commande pour la première éolienne (100a) ou le premier parc éolien (112a) est émise en fonction des données reçues de l'autre éolienne (100d) ou de l'autre parc éolien (112b), dans lequel
la première éolienne (100a) ou le premier parc éolien (112a) et l'autre éolienne (100d) ou l'autre parc éolien (112b) sont reliés à une salle de commande (30) par l'intermédiaire d'au moins une ligne de données (34, 36) et le dispositif d'évaluation (24) fait partie intégrante de la salle de commande (30) et dans lequel
plusieurs parcs éoliens (112a, 112b) sont reliés à la salle de commande (30), **caractérisé en ce que**
le premier parc éolien (112a) et le deuxième parc éolien (112b) présentent respectivement plusieurs éoliennes (100) qui fournissent leur puissance dans un réseau de parc respectif (114) de telle sorte que les puissances des éoliennes (100) du parc éolien respectif (112a, 112b) sont additionnées dans le réseau de parc respectif (114) et un transformateur est respectivement prévu pour augmenter la tension dans le réseau de parc respectif et pour injecter la puissance dans le réseau d'alimentation (120) sur le point d'injection (118).

2. Procédé selon la revendication 1, dans lequel le procédé comprend les étapes :
- d'enregistrement de premières données, qui correspondent à des premières valeurs de mesure (42a) et sont détectées avec au moins un premier capteur de la première éolienne (100a) ou du premier parc éolien (112a),
- d'enregistrement d'autres données, qui correspondent à d'autres valeurs de mesure (42b-42f) et qui sont détectées avec au moins un autre capteur au moins d'une autre éolienne (100d) différente de la première éolienne (100a) ou d'un autre parc éolien (112b) différent du premier parc éolien (112a),
- de commande de la première éolienne (100a) ou du premier parc éolien (112a) en fonction des premières et des autres valeurs de mesure (42a-42f) et/ou
- d'émission d'une notification d'événement sur l'état de fonctionnement de la première éolienne (100a) ou du premier parc éolien (112a) en fonction des premières et des autres valeurs de mesure (42a-42f).

3. Procédé selon la revendication 1 ou 2, dans lequel des premières valeurs de mesure (42a) de premiers capteurs de la première éolienne (100a) ou du premier parc éolien (112a) et d'autres valeurs de mesure (42b-42f) d'autres capteurs de l'autre éolienne (100d) ou de l'autre parc éolien (112b) sont amenées au dispositif d'évaluation (24) pour envoyer une instruction de commande et/ou une notification d'événement, dans lequel les capteurs dans les éoliennes (100a-100f) ou les parcs éoliens (112a, 112b) sont respectivement disposés dans une zone sensiblement identique ou dans une position sensiblement identique.

4. Procédé selon la revendication 2 ou 3, dans lequel le dispositif d'évaluation (24) envoie une notification d'événement, en particulier un message d'erreur, lorsqu'un écart de la première valeur de mesure (42a) par rapport aux autres valeurs de mesure (42b-42f) ou à une valeur de référence (52) déterminée à partir des autres valeurs de mesure (42b-42f), qui est en particulier une valeur moyenne ou une valeur moyenne des autres valeurs de mesure (42b-42f), qui est supérieure à une valeur de seuil prédéfinie (50), est détecté.

5. Procédé selon l'une quelconque des revendications précédentes, dans lequel, pour envoyer une instruction de commande et/ou une notification d'événement, des premières données, en particulier des premières valeurs de mesure (42a), et d'autres données, en particulier d'autres valeurs de mesure (42b à 42f) des capteurs de premières et d'autres éoliennes (100a à 100f) et/ou des premiers et d'autres parcs éoliens (112a, 112b) sont reçues et/ou sont évaluées, qui présentent une distance maximale prédéfinie de 100 km, par ex. de 500 m, 5 km, 10 km, 20 km ou 50 km..

6. Procédé selon l'une quelconque des revendications précédentes, dans lequel, dans le cas où le dispositif d'évaluation (24) reçoit d'autres données qui signalent une formation de givre sur une des autres éoliennes (100d), des données de commande pour activer les voyants d'avertissement de givre de la première éolienne (100a) ou pour activer les voyants d'avertissement de givre des éoliennes (100a-100c) sont émises avec le dispositif d'évaluation (24) respectivement à la première éolienne (100a) ou au premier parc éolien (112a).

7. Procédé selon l'une quelconque des revendications précédentes, dans lequel le dispositif d'évaluation (24) reçoit des données avec un signal de synchronisation d'une autre éolienne (100d) ou d'un autre parc éolien (112b) et envoie une instruction de commande, sous la forme d'un autre signal de synchronisation dépendant du signal de synchronisation reçu, à la première éolienne (100a) ou au premier parc éolien (112a) pour faire clignoter de manière synchrone des feux de balisage d'obstacles aériens des éoliennes (100a à 100f) du premier parc éolien (112a) et de l'autre parc éolien (112b).

8. Procédé selon l'une quelconque des revendications précédentes, dans lequel le dispositif d'évaluation (24) présente une interface de commande pour relier d'autres producteurs d'énergie qui ne sont pas en particulier des éoliennes, pour l'échange de données, dans lequel les autres générateurs d'énergie sont commandés au moyen de l'interface de commande, en particulier par l'envoi ou la réception de données, comme des valeurs de régulation, c'est-à-dire des valeurs de consigne de puissance, des valeurs de consigne de puissance réactive et similaires, par l'intermédiaire de l'interface.

9. Procédé selon l'une quelconque des revendications précédentes, dans lequel le dispositif d'évaluation (24) fait partie intégrante du premier parc éolien (112a), en particulier du premier régulateur de parc éolien (10), et reçoit, par l'intermédiaire d'une interface (18), des valeurs de régulation, comme des valeurs de consigne de puissance, des valeurs de consigne de puissance réactive et similaires, d'un autre régulateur de parc éolien (16) d'au moins un autre parc éolien (112b).

10. Procédé selon l'une quelconque des revendications précédentes, dans lequel des données météorologiques sont reçues par le dispositif d'évaluation (24) par l'intermédiaire d'une liaison de données (22, 36), les données météorologiques sont traitées dans le dispositif d'évaluation (24) et des instructions de commande sont générées en fonction des données météorologiques pour commander la première éolienne (100a) ou le premier parc éolien (112a).

11. Dispositif d'évaluation (24) avec une interface (23) pour émettre des instructions de commande à au moins une première éolienne (100a) ou un premier parc éolien (112a) et une autre interface (18, 32) pour recevoir des données qui sont transmises, par une autre éolienne (100d) d'un autre parc éolien (112b) ou un autre parc éolien (112b), au dispositif d'évaluation (24), dans lequel le dispositif d'évaluation (24) est mis au point pour l'exécution du procédé selon l'une quelconque des revendications précédentes, **caractérisé en ce que**
la première éolienne (100a) ou le premier parc éolien (112a) et l'autre éolienne (100d) ou l'autre parc éolien (112b) sont reliés à une salle de commande (30) par l'intermédiaire d'au moins une ligne de données (34, 36) et le dispositif d'évaluation (24) fait partie intégrante de la salle de commande (30) et dans lequel
plusieurs parcs éoliens (112a, 112b) sont reliés à la salle de commande (30).

12. Dispositif d'évaluation (24) selon la revendication 11 avec une interface pour relier d'autres générateurs d'énergie qui ne sont notamment pas des éoliennes.

13. Système avec un dispositif d'évaluation (24) selon la revendication 11 ou 12 pour exécuter le procédé selon l'une quelconque des revendications 1 à 10, avec au moins une première éolienne (100a) ou au moins un premier parc éolien (112a), au moins une autre éolienne (100d), en particulier un autre parc éolien (112b), ou au moins un autre parc éolien (112b) ainsi qu'une liaison de données (22, 34, 36) pour échanger des données entre l'au moins une première éolienne (100a) ou l'au moins un premier parc éolien (112a) et l'au moins une autre éolienne (100d) ou l'au moins un autre parc éolien (112b).
